## Europäisches Patentamt
## European Patent Office
## Office européen des brevets

(19)

(11) Veröffentlichungsnummer : **0 081 049**
**B1**

(12) **EUROPÄISCHE PATENTSCHRIFT**

(45) Veröffentlichungstag der Patentschrift :
06.07.88

(51) Int. Cl.⁴ : **G 01 F 15/08,** G 01 F   3/38,
A 01 J   7/00, G 01 F 23/32,
G 01 F 23/30

(21) Anmeldenummer : 82108899.4

(22) Anmeldetag : 25.09.82

(54) **Gerät zum unmittelbaren Messen der von einer Kuh im Zuge des Melkens abgegebenen Milchmenge.**

(30) Priorität : 05.10.81 DE 3139536

(43) Veröffentlichungstag der Anmeldung :
15.06.83 Patentblatt 83/24

(45) Bekanntmachung des Hinweises auf die Patenterteilung : 06.07.88 Patentblatt 88/27

(84) Benannte Vertragsstaaten :
AT BE CH FR GB IT LI NL SE

(56) Entgegenhaltungen :
CH-A-   516 327
DE-A- 2 554 473
DE-A- 3 020 161

(73) Patentinhaber : **Westfalia Separator AG
Werner-Habig-Strasse 1 Postfach 3720
D-4740 Oelde 1 (DE)**

(72) Erfinder : **Icking, Friedrich, Dipl.-Ing.
Paul-Keller-Strasse 1
D-4740 Oelde 1 (DE)**

(74) Vertreter : **Stracke, Alexander, Dipl.-Ing. et al
Patentanwälte Dipl.-Ing. Loesenbeck Dipl.-Ing.
Stracke Jöllenbecker Strasse 164 Postfach 5605
D-4800 Bielefeld 1 (DE)**

EP 0 081 049 B1

## Beschreibung

Die Erfindung bezieht sich auf ein Milchmengenmeßgerät für Melkanlagen zum unmittelbaren Messen der von einer Kuh im Zuge des Melkens abgegebenen Milchmenge, mit einer unterdruckbeaufschlagten Trennkammer zum Abscheiden der Milch aus dem abgemolkenen Milch-Luft-Gemisch sowie einer der Trennkammer nachgeordneten Meßkammer für die Milch, die in einer oberen Ebene einen Füllstandssensor für die in der Meßkammer sich ansammelnde Milch und in einer Ebene unterhalb des ersten Füllstandssensors einen zweiten Füllstandssensor aufweist, wobei beide Füllstandssensoren mit einer Einheit zum Messen der Zeit für das Auffüllen der Meßkammer vom unteren zum oberen Füllstand und mit einer Steuereinheit verbunden sind, die das Auslaufventil öffnet bzw. schließt, wenn der Füllstand die obere bzw. untere Ebene erreicht hat und eine Recheneinheit vorgesehen ist, die die gesamte Milchmenge $Q_{ges}$ aus Teilmengenmessungen errechnet.

Ein Milchmengenmeßgerät dieser Art ist Gegenstand der nicht vorveröffentlichten EP-A-0 041 120 (Art. 54 (3) EPÜ ; Priorität 28.05.80 ; Veröffentlichungstag 09.12.81). Bei diesem Milchmengenmeßgerät schließt das Auslaufventil am Ende eines Meßintervalls, in dem eine Auffüllzeit und eine Auslaufzeit liegt.

Der Erfindung liegt die Aufgabe zugrunde, die Meßgenauigkeit des eingangs genannten Milchmengenmeßgeräts noch zu verbessern.

Diese Aufgabe wird erfindungsgemäß dadurch gelöst, daß mittels der Steuereinheit das Auslaufventil zeitlich versetzt zum Ende oder/und zum Anfang eines Meßintervalls geschlossen wird.

Es bietet sich hierdurch auch die Möglichkeit, mittels der Steuereinheit das Auslaufventil innerhalb eines Meßintervalls mehrmals zu öffnen und zu schließen, wodurch die Meßgenauigkeit weiter gesteigert wird.

Ausführungsbeispiele des Milchmengenmeßgerätes werden anhand der Zeichnungen näher erläutert. Es zeigt :

Fig. 1 ein Milchmengenmeßgerät im Vertikalschnitt, bei dem unterhalb der Meßkammer eine Sammelkammer vorgesehen,

Fig. 2 eine grafische Darstellung der Arbeitsweise des Milchmengenmeßgerätes nach der EP-A-0 041 120,

Fig. 3 bis 6 grafische Darstellungen verschiedener Arbeitsweisen des erfindungsgemäßen Milchmengenmeßgerätes.

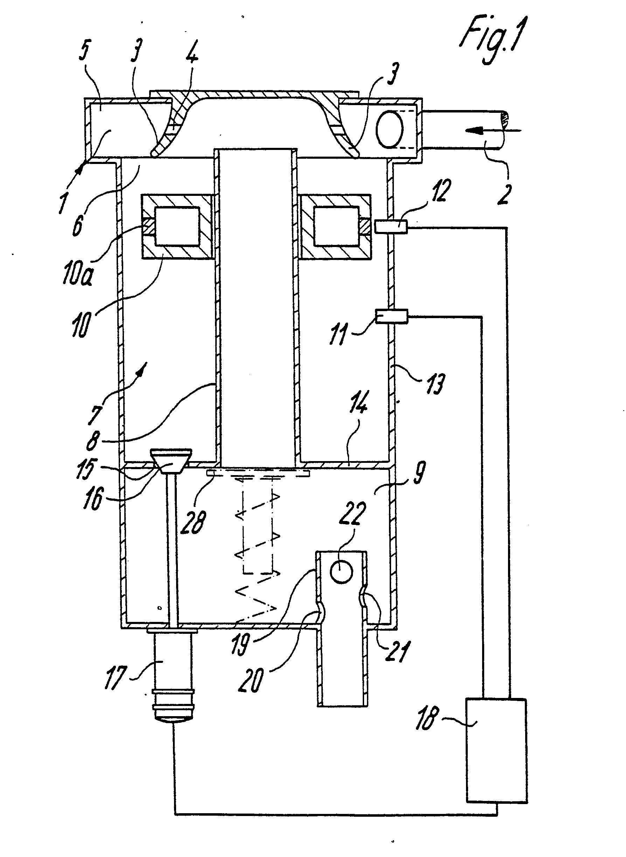

Das in der Fig. 1 dargestellte Milchmengenmeßgerät ist mit einer Trennkammer 1 ausgerüstet, der das abgemolkene Milch-Luft-Gemisch tangential über einen Stutzen 2 zugeführt wird. Die Trennkammer 1 ist mit Leitschaufeln 3 versehen, die Durchströmbohrungen 4 für die Luft aufweisen, die sich vom Milch-Luft-Gemisch trennt, zumal die Milch den Außenbereich 5 der Trennkammer 1 ausfüllt. Über eine ständig geöffnete Einströmöffnung 6 gelangt die Milch in eine Meßkammer 7, während die Luft über ein Luftführungsrohr 8 in eine Sammelkammer 9 strömt.

Auf dem Luftführungsrohr 8 ist ein Schwimmer 10 gleitbar gelagert. Dieser Schwimmer, der mit einem Dauermagneten 10a ausgerüstet ist, arbeitet mit zwei Füllstandssensoren (Magnetsensoren) 11 und 12 zusammen, die in der Wandung 13 der Meßkammer festgelegt sind.

Im Boden 14 der Meßkammer ist eine Milchauslauföffnung 15 vorgesehen, die über einen Ventilkörper 16 verschlossen werden kann. Der Ventilkörper ist Teil eines elektromagnetisch betätigbaren Ventils 17, das über ein elektronisches Gerät 18 elektrisch mit den Füllstandssensoren 11, 12 in Verbindung steht. Sofern der Schwimmer mit dem Füllstandssensor 12 zusammenwirkt, wird der Ventilkörper 16 in die Offenstellung gefahren. Die Milch fließt dann aus der Meßkammer 7 in die Sammelkammer 9, in die ein Abflußstutzen 19 ragt, der mit der Milchleitung verbunden ist und in der Höhe versetzte Abflußöffnungen 20, 21, 22 aufweisen kann.

Das Volumen V der Meßkammer zwischen den Füllstandssensoren 11, 12 ist kleiner als das Volumen $V_1$ der Sammelkammer 9.

Sofern im Zuge des Ausfließens der Milch aus der Meßkammer der Schwimmer so weit abgesenkt wurde, daß sein Magnet 10a mit dem Füllstandssensor 11 zusammenwirkt, wird das Ventil 17 in die Verschlußstellung bewegt.

Beim Gegenstand der EP-A-0 041 120 wird beim Auffüllen der Meßkammer bei geschlossenem Ventil 17 mit Hilfe der beiden Füllstandssensoren 11, 12 o.dgl. die Zeit $c_i$ mit gemessen, die der Schwimmer 10 benötigt, um vom unteren zum oberen Füllstandssensor zu gelangen. In dieser Zeit wird in die Meßkammer das Volumen V gefüllt. Nach Erreichen des oberen Meßpunktes wird über das Ventil 17 die Milchauslauföffnung 15 geöffnet, bis der Schwimmer in der Zeit $d_i$ bis zum unteren Meßpunkt gefallen ist. Dort wird das Ventil geschlossen und der Schwimmer steigt wieder.

$$Q_i = \frac{V}{c_i} .$$

ist der mittlere Zufluß während der Zeit $c_i$.

Annahme : der Zufluß bleibt während der Zeit $d_i$ konstant $Q_i$, dann beträgt das während $b_i = c_i + d_i$ (Fig. 2) zugeflossene Volumen

$$V_i = Q_i \times b_i = \frac{b_i}{c_i} \times V$$

Bei n-Messungen erhält man als Gesamtvolumen :

$$Q_{ges} = \sum_{i=1}^{n} V_i = V \times \sum_{i=1}^{n} \frac{b_i}{c_i}$$

Aus der Fig. 2, die grafisch die Arbeitsweise des Milchmengenmeßgerätes nach (dem Anspruch 3) der EP-A-0 041 120 zeigt, ergibt sich, daß die Zeit $b_i$ eines Meßintervalls sich aus der Summe der Auffüllzeit $c_i$ und der Öffnungszeit $d_i$ des Auslaufventils 17 zusammensetzt. Das Ende des Meßintervalls fällt jeweils mit dem Ende der Öffnungszeit eines Meßintervalls zusammen.

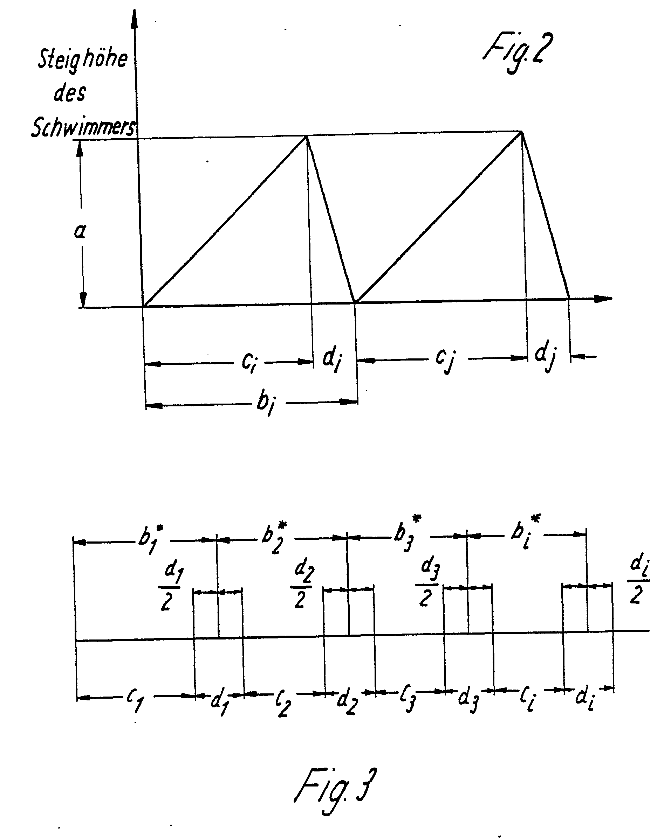

Um die Meßgenauigkeit des Milchmengenmeßgerätes nach (dem Anspruch 3) der EP-A-0 041 120 noch zu steigern, werden beim erfindungsgemäßen Milchmengenmeßgerät, wie sich aus den grafischen Darstellungen in den Fig. 3 bis 6 ergibt, die Auffüllzeit bzw. die Auffüllzeiten in den mittleren Bereich eines Meßintervalls verlagert.

Bei der in der Fig. 3 aufgezeigten Arbeitsweise des Milchmengenmeßgerätes wird das Gesamtvolumen $Q_{ges}$ wie folgt berechnet :

$$Q_{ges} = V \sum_{i=1}^{n} \frac{b_i{}^*}{c_i} \quad \text{mit} \quad b_1{}^* = c_1 + \frac{d_1}{2} \quad \text{und}$$

$$b_i{}^* = \frac{d_{i-1}}{2} + c_i + \frac{d_i}{2} \quad \text{für} \quad i = 2, 3...$$

Ein weiteres Ausführungsbeispiel zur Bestimmung des Gesamtvolumens $Q_{ges}$ ist in der Fig. 4 aufgezeigt. Hierbei wird die Zeit $b_i$ nicht gemessen, sondern festgesetzt. Diese Zeit $b'_i$ kann z. B. eine Minute betragen. Durch Messung der Auffüllzeit $c_i$ ist der mittlere Zustrom in l/min bekannt. Ist das Auffüllvolumen V der Meßkammer klein, so erfolgen normalerweise viele Messungen in kurzen Zeitabständen hintereinander. Wird eine feste Zeit $b'_i$ vorgegeben, so können die in dieser Zeit gemessenen Zuflußwerte durch einen Mittelwert ersetzt werden. Daraus kann dann das Volumen für die Zeit $b'_i$ errechnet werden.

Das Gesamtvolumen wird nach der Formel bestimmt :

$$Q_{ges} = V \sum_{i=1}^{n} \frac{b'_i}{c_i}.$$

Es ist jedoch auch möglich, die Zeit $b'_i$ für ein Meßintervall abhängig von der zugehörigen Auffüllzeit $c_i$ zu machen.

Diese Arbeitsweise des Milchmengenmeßgerätes ist in der Fig. 5 aufgezeigt.

Je mehr Messungen von $c_i$ pro Zeiteinheit vorliegen, umso kürzer kann $b'_i$ werden. Bei zwei Messungen in der Minute kann $b'_i = 0,5$ min und bei vier Messungen in der Minute $b'_i = 0,25$ min werden.

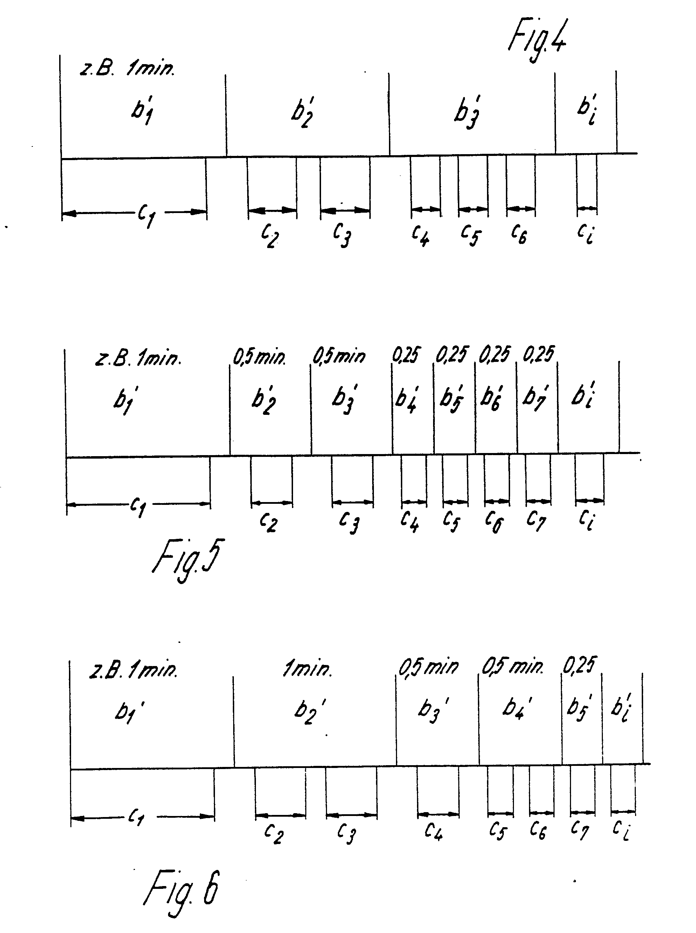

Bei dem Ausführungsbeispiel nach der Fig. 6 ist die Zeit des Meßintervalls $b'_i$ abhängig von vorherigen Meßdaten.

Die erste Messung wird in einer vorgegebenen Zeit $b'_i$ vorgenommen, die z. B. eine Minute betragen kann. Die Dauer der folgenden Meßintervalle ist abhängig von der Anzahl der Auffüllvorgänge im vorhergehenden Meßintervall. Sofern in dem vorhergehenden Meßintervall zwei Auffüllungen erfolgen, kann die Zeit für das nächste Intervall halbiert werden.

## Patentansprüche

1. Milchmengenmeßgerät für Melkanlagen zum unmittelbaren Messen der von einer Kuh im Zuge des Melkens abgegebenen Milchmenge, mit einer unterdruckbeaufschlagten Trennkammer (1) zum Abscheiden der Milch aus dem abgemolkenen Milch-Luft-Gemisch sowie einer der Trennkammer nachgeordneten Meßkammer (7) für die Milch, die in einer oberen Ebene einen Füllstandssensor (12) für die in der Meßkammer sich ansammelnde Milch und in einer Ebene unterhalb des ersten Füllstandssensors einen zweiten Füllstandssensor (11) aufweist, wobei beide Füllstandssensoren mit einer Einheit zum Messen der Zeit für das Auffüllen der Meßkammer (7) vom unteren zum oberen Füllstand und mit einer Steuereinheit (18) verbunden sind, die das Auslaufventil (17) öffnet bzw. schließt, wenn der Füllstand die obere bzw. untere Ebene erreicht hat und eine Recheneinheit vorgesehen ist, die die gesamte

3

Milchmenge $Q_{ges}$ aus Teilmengenmessungen errechnet, wobei mittels der Steuereinheit (18) das Auslaufventil (17) zeitlich versetzt zum Ende oder/und zum Anfang eines Meßintervalls geschlossen wird.

2. Milchmengenmeßgerät nach Anspruch 1, dadurch gekennzeichnet, daß durch die Steuereinheit (18) das Auslaufventil (17) innerhalb eines Meßintervalls mehrmals geöffnet und geschlossen wird.

3. Milchmengenmeßgerät nach Anspruch 1, dadurch gekennzeichnet, daß durch eine Einheit zum Messen die Zeit $b_i$ des jeweiligen Meßintervalls ermittelt oder die Zeit $b_i$ vorgegeben und konstant gehalten wird.

## Claims

1. An apparatus for measuring an amount of milk for milking installations for the direct measurement of the amount of milk produced by a cow in the course of the milking operation, comprising a separating chamber (1) which is subjected to a reduced pressure, for separating the milk from the milked milk-air mixture, and a measuring chamber (7) for the milk, which is arranged downstream of the separating chamber and which in an upper plane has a filling level sensor (12) for the milk which accumulates in the measuring chamber and, in a plane below the first filling level sensor, a second filling level sensor (11), both filling level sensors being connected to a unit for measuring the time for filling the measuring chamber (7) from the lower filling level to the upper filling level and to a control unit (18) which opens or closes the outlet valve (17) when the filling level has reached the upper or the lower plane respectively, a computing unit being provided to compute the total amount $Q_{ges}$ of milk from measurement of partial amounts, the outlet valve (17) being closed by means of the control unit (18) in displaced relationship in respect of time relative to the end or/and the beginning of a measuring period.

2. A measuring apparatus according to claim 1 characterised in that the outlet valve (17) is opened and closed by the control unit (18) a plurality of times within a measuring period.

3. A measuring apparatus according to claim 1 characterised in that the time $b_i$ of the respective measuring period is ascertained by a measuring unit or the time $b_i$ is predetermined and is kept constant.

## Revendications

1. Appareil de mesure de quantités de lait pour installations de traite, pour la mesure directe de la quantité du lait tirée d'une vache au cours de la traite, avec une chambre de séparation sollicitée en dépression (1) pour séparer le lait du mélange trait d'air et de lait, ainsi qu'avec une chambre de mesure du lait (7) disposée à la suite de la chambre de séparation, qui présente dans un plan supérieur un capteur de niveau de remplissage (12) pour le lait s'accumulant dans la chambre de mesure et dans un plan situé en dessous du premier capteur de niveau de remplissage un deuxième capteur de niveau de remplissage (11), les deux capteurs de niveau de remplissage étant reliés à une unité destinée à mesurer le temps de remplissage de la chambre de mesure (7) du niveau de remplissage inférieur au niveau supérieur, et à une unité de commande (18) qui ouvre ou selon le cas ferme la valve d'évacuation (17) lorsque le niveau de remplissage a atteint le plan supérieur ou selon le cas inférieur, et une unité de calcul étant prévue, laquelle calcule la quantité totale de lait $Q_{tot}$ à partir de mesures de quantités partielles, l'unité de commande (18) fermant avec décalage dans le temps la valve d'évacuation (17) à la fin ou/et au début d'un intervalle de mesure.

2. Appareil de mesure de quantités de lait selon la revendication 1, caractérisé en ce que l'unité de commande (18) ouvre et ferme plusieurs fois la valve d'évacuation (17) au cours d'un intervalle de mesure.

3. Appareil de mesure de quantités de lait selon la revendication 1, caractérisé en ce qu'une unité de mesure détermine la durée $b_i$ de l'intervalle de mesure respectif, ou alloue et maintien constante la durée $b_i$.

4

Fig.1

Fig. 2

Fig. 3

Fig.4

Fig.5

Fig.6